(19)

Europäisches
Patentamt

European
Patent Office

Office européen
des brevets

(11) **EP 3 828 151 A1**

(12) **EUROPEAN PATENT APPLICATION**

(43) Date of publication:
   **02.06.2021   Bulletin 2021/22**

(51) Int Cl.:
   ***C04B 7/13*** *(2006.01)*

(21) Application number: **19211456.9**

(22) Date of filing: **26.11.2019**

(84) Designated Contracting States:
   **AL AT BE BG CH CY CZ DE DK EE ES FI FR GB GR HR HU IE IS IT LI LT LU LV MC MK MT NL NO PL PT RO RS SE SI SK SM TR**
   Designated Extension States:
   **BA ME**
   **KH MA MD TN**

(71) Applicant: **Cemgreen ApS**
   **4000 Roskilde (DK)**

(72) Inventors:
   • **Dossing, Lasse Norbye**
     **4000 Roskilde (DK)**
   • **Rasmussen, Martin Hagsted**
     **4000 Roskilde (DK)**

(74) Representative: **Grünecker Patent- und Rechtsanwälte**
   **PartG mbB**
   **Leopoldstraße 4**
   **80802 München (DE)**

(54) **METHOD FOR PRODUCING CEMENT COMPRISING A SUPPLEMENTARY CEMENTITIOUS MATERIAL, AND CEMENT OBTAINABLE THEREBY**

(57)   The invention is concerned with a method for producing a cement comprising milled cement clinker and a supplementary cementitious material, wherein the method comprises the steps of: producing the milled cement clinker by a clinkerization process, comprising the steps of calcining and subsequently milling a limestone-based raw material; producing the supplementary cementitious material by calcining a raw material of the supplementary cementitious material at a temperature of less than 980°C and subsequently milling the calcined raw material of the supplementary cementitious material, wherein the raw material of the supplementary cementitious material has an average particle size of 1 to 300 mm, wherein at least 5 wt% of the particles have a particle size of above 4.75 mm; and blending the milled cement clinker and the supplementary cementitious material. Further, the invention is concerned with a Method for producing a cement comprising milled cement clinker and a supplementary cementitious material, wherein the method comprises the steps of: producing the milled cement clinker by a clinkerization process, comprising the steps of calcining and subsequently milling a limestone-based raw material; producing the supplementary cementitious material by calcining a raw material of the supplementary cementitious material at a temperature of less than 980°C and subsequently milling the calcined raw material of the supplementary cementitious material, wherein the raw material of the supplementary cementitious material has an average particle size of 1 to 300 mm; and blending the milled cement clinker and the supplementary cementitious material; wherein the method is a continuous process comprising the step of calcining the raw material of the supplementary cementitious material in a kiln with a separate heating unit and/or combustion unit. The invention is also concerns a cement comprising milled cement clinker and a supplementary cementitious material, wherein the supplementary cementitious material comprises an amorphous constituent of more than 30 wt% as measured by XRD, wherein the supplementary cementitious material comprises less than 70 wt% of inert components selected from the group comprising mullite, spinel, feldspar, diopside, mica, or combinations thereof, and wherein the color of the cement in the range of 130-160, 130-160, 120-160, wherein the measurement of the cement color is conducted by a RGB2 colorimeter, wherein the colors are referenced to a RGB scale of 0 to 255.

EP 3 828 151 A1

**Description**

The invention relates to methods for producing cement comprising milled cement clinker and a supplementary cementitious material, and to a cement obtainable by said methods.

Background

Cement is used world-wide in huge amounts e.g. as a binder in concrete. One major raw material for producing cement is limestone ($CaCO_3$). Naturally occurring limestone is first crushed into small pieces in the quarry and then transported to the cement production site. Said small pieces are ground or milled at the cement production site usually to a size of approximately 1 to 100 $\mu$m. The resulting limestone powder is mixed with an aluminum containing raw material and then injected into a pre-heater, wherein the mixture is heated to about 800°C. Subsequently, the mixture is injected into a rotary kiln, wherein the temperature is gradually raised to at least 1450°C, whereby the limestone starts melting. As the melt continues out of the kiln, it cools and agglomerates in small nodules called clinker, having a particle size of 1 to 50 mm. These clinkers are subsequently mixed with gypsum ($CaSO_4$) and ground again into fine powder, the so-called milled cement clinker. Said milled cement clinker usually has an average particle diameter of 1 to 100 $\mu$m.

The transformation of limestone to CaO liberates significant amounts of $CO_2$, typically 0.8 kg $CO_2$ per kg produced clinker. The total production of cement is around 4 gigatons per year, resulting in a total $CO_2$ emission that accounts for 5-7% of the global $CO_2$ emissions. Cement production is also very energy consuming, increasing the associated $CO_2$ footprint further. The high $CO_2$ footprint is unwanted and has been linked to climatic change. The increased demand of cement causes an urgent need to increase the cement production capacity while reducing at the same time the $CO_2$ emissions associated with the production of the cement clinker.

One approach of increasing the cement capacity while simultaneously reducing the $CO_2$ emissions is to partially replace the clinker by a supplementary cementitious material (SCM). Several supplementary cementitious materials have been tested and are commercially used. Examples are e.g. fly ash or ground granulated blast furnace slag. However, the use of these supplementary cementitious materials is limited by their availability. Further, the mechanical properties of the resulting cement are in any case somewhat inferior, when compared to non-supplementary cements, such as Portland type cement.

Further approaches are known that employ clay, shale, slate or mudstone materials as supplementary cementitious materials. In general, such materials are natural geologic rock materials that are formed during sedimentation in a water column. Naturally occurring clay, shale, slate or mudstone minerals have a very low pozzolanic activity, which is necessary to achieve good mechanical cement properties. However, the pozzolanic activity can be increased by heat treating the minerals, which results in the removal of hydroxyl groups. Conventional processes usually involve a milling/grinding of the clay, shale, slate or mudstone materials prior to the heat treatment.

For instance, US 2012/0055376A1 discloses a cement comprising a supplementary cementitious material, which is formed by heat treating naturally occurring clay materials at a temperature of 500°C to 900°C. However, these naturally occurring clay materials are usually milled before usage or at least have a broad or particle size distribution and inter alia comprise a relatively high content of particles with a particle size of smaller than 0.1 mm. This relatively small particle size is accompanied with a huge surface area, which has the disadvantage that heat treatment results in an unwanted discoloration of the clay particles and the resulting cement. This can be explained by the fact that e.g. Fe, Cr, Ti, Cu, U or Mn components, which are usually contained in clay materials, are oxidized due to the presence of oxygen during heat treatment, which results in an unwanted color change. For instance, the color of the resulting concrete is shifted to a pink or a green color. This oxidation and unwanted discoloration is conducted to an unfavorable extent in US 2012/0055376A1 due to the relatively small particle size of the supplementary cementitious material.

Another approach is disclosed in CN101913787, which relates to a method of calcining and activating shale, having a rather high particle size of 5 to 15 mm, in a cement mixture comprising the steps of grinding the shale into particles and adding the particles in a grate cooler of a cement kiln, calcining the shale by utilizing the waste heat of the grog so as to activate the shale into the cement mixture. In other words, CN101913787 discloses that the particles of the supplementary cementitious material are inserted into the clinker cooler for calcining using the waste heat of the cement kiln, i.e. the supplementary cementitious material is calcined together with the cement clinker. In view of this specific process set-up, the method shown in CN101913787 is restricted to very low substitution ratios of supplementary cementitious material due to the fact the method utilizes the limited waste heat of the grog to activate the shale, i.e. the calcining in CN101913787 is bound to the conditions of the clinker cooler. In fact, only very low substitution rates of approximately 6 wt% or lower can be achieved.

Further, the publication "Report on the Use of Raw or Processed Natural Pozzolans in Concrete" (American Concrete Institute, ACI 232.1R-12, July 2012, ISBN 978-0-87031-773-6) shows several ways of increasing the pozzolanic activity of natural clay, slate or shale materials. For instance, item 4.2 of said publication discloses a process employing shale or slate as raw material. The raw material is crushed to particles with a maximum size of 38mm and then calcined (heat-treated) in a rotary kiln at a temperature of 980 to 1090°C and with a residence time of approximately 45 minutes. It is reported that the clinker size ranges from 6 to 51mm and that the finished product is achieved by grinding the clinker to a Blaine fineness of 600 to 800 m$^2$/kg. The loss on ignition (LOI) of the calcined shale is from 1 to 5%. However, the calcining temperature of the raw material is 980°C or higher, which results in a significant vitrification of the material, i.e. the occurrence of melting phases that is associated with an agglomeration of the particles. In turn, the chemical reactivity of the obtained particles decreases, which leads to an inferior pozzolanic activity of the calcined material. In view of this, the mechanical properties of resulting cement, such as the compressive strength, are also decreased.

The scientific article "Calcined illite-chlorite shale as supplementary cementing material: Thermal treatment, grinding, color and pozzolanic activity", E.F. Irassar et al., 179 (2019), aims at investigating the best calcination conditions for the industrial production of SCM in a conventional clinker production line with a rotary kiln. Such conventional kilns are usually operated by internal combustion of fuels. The article discloses that the optimum calcination window of the SCM materials should be between 900 and 1000 °C in order to avoid glass formation. Concerning the particle size of the raw material of the SCM, it is mentioned that quarry samples were crushed to particle size lower than a 4.75 mm sieve. The actually produced samples are calcined in a programmable laboratory furnace. However, the article applies a raw SCM with a relatively low particle size and does not address the influence of the particle size and distribution of the raw SCM on the resulting cement properties. Thus, the resulting cement properties are still insufficient.

In view of this, there still exists a strong need for the provision of methods for producing cement with a reduced environmental impact, which allow highly flexible process conditions and a high substitution rate of the supplementary cementitious material, which prevent or at least minimize unwanted discoloration of the cement, and which result in a cement with increased mechanical properties, such as compressive strength, when compared to other substituted cements, in combination with improved optical properties. Further, there is still a need for a cement with has increased mechanical properties, such as compressive strength, when compared to other substituted cements, in combination with improved optical properties.

Problem of the invention:

In view of this, the problem of the present invention is the provision of methods for producing cement comprising milled cement clinker and supplementary cementitious material, which can reduce the CO$_2$ emission and energy consumption, which allow a highly flexible process and a high substitution rate of the milled cement clinker, and which lead to a cement with a reduced unwanted discoloration and with increased mechanical properties, such as compression strength, when compared to other substituted cements. A further problem is the provision of a cement comprising milled cement clinker and supplementary cementitious material, which can be produced with reduced CO$_2$ emission and energy consumption, which shows a high substitution rate of the milled cement clinker, a reduced unwanted discoloration and increased mechanical properties, such as compression strength, when compared to other substituted cements.

Brief description of invention:

This problem is solved by the first method for producing a cement comprising milled cement clinker and a supplementary cementitious material in accordance with claim 1. Preferred embodiments of the method are defined in claims 2 to 13. Alternatively, this problem is solved by the second method for producing a cement comprising milled cement clinker and a supplementary cementitious material in accordance with claim 14. The preferred embodiments as defined in claims 2 to 13 and as discussed below in the specification for the first method also apply for the second method, unless otherwise noted. All preferred embodiments for the first and the second method are also encompassed in combination. Further, these problems are solved by the cement in accordance with claim 15.

Figures:

The invention and its advantages is further illustrated by the following figures:

Figure 1 illustrates an embodiment of an inventive method employing a commercially available kiln with internal combustion.

Figure 2 illustrates an embodiment of an inventive method employing a kiln with a separate combustion unit.

Figure 3 illustrates an embodiment of an inventive method employing a kiln with a separate heating unit.

Figure 4 illustrates an embodiment of an inventive method employing a kiln with a combination of a separate heating unit and a separate combustion unit.

Figure 5 illustrates ways of employing the SCM for producing cement products.

Figure 6 shows a schematic view of a storage-preheating unit.

Detailed description of invention:

The first method for producing a cement comprising milled cement clinker and supplementary cementitious material in accordance with the present invention comprises the steps of: producing the milled cement clinker by a clinkerization process, comprising the steps of calcining and subsequently milling a limestone-based raw material; producing the supplementary cementitious material by calcining at a temperature of less than 980 °C and subsequently milling a raw material of the supplementary cementitious material, wherein the raw material of the supplementary cementitious material has a particle size of 1 to 300 mm, wherein at least 5 wt% of the particles have a particle size of above 4.75 mm; and blending the milled cement clinker and the supplementary cementitious material.

The term "limestone-based raw material" in accordance with the present invention is defined as a solid material comprising calcium carbonate minerals such as the minerals calcite ($CaCO_3$) or dolomite ($CaMg(CO_3)_2$). The limestone-based raw material can be transformed into a material comprising CaO and MgO upon calcining. The chemical composition of limestone is as defined in the European harmonized standard for common cements EN 197-2000.

The "cement" in accordance with the present invention is in a preferred embodiment blended or substituted Portland cement. The chemical composition of Portland cement is defined in the European harmonized standard for common cements EN 197-2000. However, the present invention is not limited to Portland cements and encompasses any other cement types.

The term "cement clinker" in accordance with the present invention is defined as particles that are produced by mixing crushed limestone based raw material with one or more additive materials, such as aluminum containing materials, calcining the mixture, heating the mixture further to a temperature, where the limestone starts melting, and cooling the mixture, whereby the material agglomerates to cement clinker during clinkerization. A clinkerization process is thus a process including the steps of mixing crushed limestone based raw material with one or more additive materials, such as aluminum containing materials, calcining the mixture at a temperature, where the limestone starts melting, and cooling the mixture, whereby the material agglomerates to cement clinker. Preferably, the cement clinker has an aluminum content of less than 10 wt%, preferably less than 8 wt%, more preferably less than 6 wt% expressed as $Al_2O_3$. The cement clinker usually has a particle size of 1 to 50 mm.

The term "milled cement clinker" in accordance with the present invention is defined as particles of cement clinker, which are obtained by milling cement clinker, wherein the cement clinker may have been previously mixed with additive materials such as gypsum ($CaSO_4$). The milled cement clinker has a particle size of 1 to 500 $\mu$m, preferably 10 to 200 $\mu$m, more preferably 20 to 80 $\mu$m. The cement clinker has in embodiments a surface area using the Blaine method described in EN 196 of 1500 to 10 000 $cm^2$/g, preferably 2000 to 9000 $cm^2$/g, more preferably 3000 to 7000 $cm^2$/g.

The term "average particle size" in terms of the present application is defined as the arithmetic average particle size as measured according to ASTM C 430-96(2003).

The term "supplementary cementitious material" (or "SCM") is defined as a material, with which cement can be substituted, i.e. partially replaced. Suitable supplementary cementitious materials may be in embodiments derived from raw materials that are selected from the group comprising clay, mudstone, shale or slate materials, or combinations thereof. The raw materials supplementary cementitious materials in terms of the present invention comprise in embodiments at least 40 wt% clay minerals. The mineral content can be determined by a suitable method for measuring the acid soluble residue and/or by quantitative X-ray diffraction.

Clay materials constitute a preferred embodiment for the raw material for the supplementary cementitious material. The clay materials in terms of the present invention are defined as materials comprising at least 40 wt% clay minerals belonging to the kaolin group, the smectite group, the illite group, chlorite group or combinations thereof. Suitable clay minerals of the kaolin group are e.g. kaolinite, dickite, nacrite or halloysite. Suitable further clays minerals belong to the smectite group including octahedral vermiculites such as vermiculite, dioctahedral smectites such as montmorillonite and nontronite and trioctahedral smectites such as saponite, the illite group such as illite, glauconite and brammallite or to the chlorite group such as chamosite.

In general, clay, shale, slate or mudstone materials are composed of agglomerated fine particles comprising hydrous aluminum phyllosilicates, which arise from continental weathering and which are transported with the water column by e.g. riverine input. Clay particles can remain suspended in the water column long after the larger particles of sand have deposited and are typically sedimented further from shore compared to plastic sediments. Shale, slate and mudstone are predominantly deposited in very slow-moving water columns in marine sedimentary basins or on the continental shelf, in relatively deep, quiet water columns. Shale, slate and mudstone are also deposited and found in lakes and lagoonal deposits, in river deltas, on floodplains and offshore from beach sands.

Shale, slate and mudstones are defined as fine-grained, clastic sedimentary rocks composed of predominantly clayish materials and minor constituents of quartz, calcite and metal oxides. Mudstones are less altered by solidification processes than shales and slates. Shale is characterized by parallel layering or bedding with a thickness less than 3 cm. Shale and slate are composed of variable amounts of clay materials and quartz grains and the typical color is grey.

The supplementary cementitious material usually comprises in embodiments oxidizable components, such as Fe, Cr, Ti, Cu, U or Mn components. The Fe content is preferably 0.500 to 20.000 wt%. The Cr content is preferably 0.010 to 5.000 wt%, the Ti content is preferably 0.100 to 5.000 wt%, the Cu content is preferably 0.001 to 0.010 wt%. The U content is preferably 0.001 to 0.100 wt%. The Mn content is preferably 0.010 to 1.000 wt%. The content is preferably measured with an X-ray fluorescence (XRF) spectrometer or alternatively with an inductively coupled plasma mass spectrometer (ICP-MS).

The term "milling" in terms of the present application is used as a synonym for crushing/grinding and defines a physical process of forming particles from a solid raw material and/or of reducing the particle size of a particulate raw material. Milling means are commonly known and are e.g. roller press, ball mill, vertical roller mill, dryer crusher and jaw crusher.

The term "calcining" refers to a thermal treatment, usually in the presence of gas containing less oxygen than ambient air, of a given raw material in order to achieve a chemical decomposition. The calcination degree can be determined by thermogravimetry and/or DTA (e.g. Bich et al., Applied Clay Science, 44 (2009) 194-200).

For instance, calcining of a limestone-based raw material releases $CO_2$ from the limestone-based raw material to produce CaO. Typical calcining temperatures of the limestone-based raw material in order to at least partially release $CO_2$ are in the range of from 600°C to 1200°C, preferably 700°C to 1000 °C.

The calcining of a raw material of a supplementary cementitious material achieves a dehydroxylation in order to produce the supplementary cementitious material. The term "dehydroxylation" refers to the at least partial loss of one or more hydroxyl groups as water upon heating. The calcining of the supplementary cementitious material in accordance with the inventive method must be conducted at a distinct temperature to achieve a high pozzolanic activity. Pozzolanic activity means that the supplementary cementitious material can act as a pozzolan in the cement. Pozzolanic activity is in generally known as the ability to chemically react in the presence of water with calcium hydroxide at ordinary temperature in order to form compounds possessing cementitious properties.

For the method in accordance with the present invention, it is important that the raw material of the supplementary cementitious material is calcined at a temperature of less than 980°C, preferably in a range of from 500 to 960°C, more preferably in a range of from 700 to 950°C. A calcining at this temperature avoids a so-called vitrification of the material. In this regard, reference is made to the scientific publication "Investigation of the Effect of Heat on the Clay Minerals Illite and Montmorillonite, R.E. Grim and W.F. Bradley, Journal of the American Ceramic Society, 1940, Vol. 23, No. 8, 242-248), which clearly states that the calcining temperature of the clay materials must not exceed 980°C in order to prevent the occurrence of vitrification.

Vitrification is the occurrence of melting phases and the formation of inert minerals, such as mullite, that is associated with an agglomeration of the particles. If vitrification is avoided, the chemical reactivity of the obtained particles is kept as high as possible in order to ensure the optimum pozzolanic activity of the calcined material. In view of this, the mechanical properties of resulting cement, such as the compressive strength, are favorable. In contrast thereto, particles of a supplementary cementitious material, which are calcined at a temperature of 980 °C or higher, show a decreased pozzolanic activity, since they cannot undergo a chemical pozzolanic reaction in the cement and become inert, but may merely act as nucleation seeds for the cement, such as commonly known for silica fumes.

The resulting high pozzolanic activity ensures that the cement shows improved mechanical properties, such as compressive strength, that particularly are higher than that of conventional substituted (or blended) cements and that are in embodiments at least comparable to an unsubstituted Portland cement. For instance, the cement may have a compressive strength of 1 to 30 MPa, preferably 5 to 25 MPa, more preferably 10 to 20 MPa after 1 day, and/or 10 to 70 MPa, preferably 15 to 60 MPa, more preferably 20 to 50 MPa after 7 days. In embodiments, the cement shows at least 50%, preferably at least 65%, more preferably at least 80% of the compressive strength of a respective unsubstituted Portland cement. In embodiments, the compressive strength of the final cement product is 50-150%, preferably 75-100%, of that of ordinary Portland cement after 28-days of curing. The compressive strength is measured according to EN 197-1:2000.

Further, it is necessary for the inventive method that the raw material of the supplementary cementitious material, which undergoes the calcining process, has an average particle size of 1 to 300 mm. In embodiments, the supplementary cementitious material may have an average particle size of 5 to 250 mm, preferably 10 to 200 mm, more preferably 20 to 150 mm. Raw materials of supplementary cementitious materials, having this average particle size range, are commonly available or can be obtained by commonly known methods from quarry material by a roller press through the use of cylindrical rollers, ball mill through the use of impacts, vertical roller mill through vertical rollers, dryer crusher through impact and jaw crusher by a moveable jaw. Such large average particles sizes of up to 300 mm can be particularly used, since the claimed method imparts a cracking of the raw material of the supplementary cementitious material during the calcining step, which reduces the sizes of the particles.

For the first method in accordance with the present invention, a specific adjustment of the particle size distribution is further necessary. In particular, it is further necessary that at least 5 wt% of the particles of the supplementary cementitious material have a particle size of above 4.75 mm. In embodiments, at least 15 wt%, preferably at least 25 wt%, more preferably at least 35 wt%, more preferably at least 50 wt%, more preferably at least 70 wt%, more preferably at least 90 wt%, more preferably at least 95 wt%, of the particles of the supplementary cementitious material have a particle size of above 4.75 mm. In other embodiments, at least 5 wt%, preferably at least 15 wt%, more preferably at least 35 wt%, more preferably at least 50 wt%, more preferably at least 70 wt%, more preferably at least 90 wt%, more preferably at least 95 wt%, of the particles of the supplementary cementitious material have a particle size of above 10 mm. The presence of such a significant amount of particles with large particle sizes enables the production of a cement having the required improved color values in combination with sufficient compressive strengths. The properties of such a cement are particularly improved, when compared to a method, which employs a raw material of the supplementary cementitious material that passes a 4.75 mm sieve, such as for instance disclosed in the scientific article "Calcined illite-chlorite shale as supplementary cementing material: Thermal treatment, grinding, color and pozzolanic activity", E.F. Irassar et al, 179 (2019). This can be explained by the fact that particularly SCM particles with a relatively small particle size overproportionally deteriorate the resulting cement color. Further, larger particles are less susceptible for being overheated or overburned during the calcination process and are thus less prone to vitrification. Thus, a high amount of particles in the SCM raw material, which show a large particle size as defined above, ensures that a sufficient amount of the calcined SCM material has a pozzolanic activity. The adjustment of the particle size distribution is therefore particularly important, when the calcining of the raw material of the supplementary cementitious material is conducted in a conventional kiln with internal combustion. The reason for this is that the occurrence of temperature peaks that significantly exceed the average kiln temperature often cannot be avoided, when conducting the calcination in a conventional kiln with internal combustion.

Subsequently to the calcining process, the raw material of the supplementary cementitious material is milled. In embodiments, the particle size of the final supplementary cementitious material is 1 to 100 $\mu$m, preferably 10 to 90 $\mu$m, more preferably 20 to 80 $\mu$m. The supplementary cementitious material has in embodiments a surface area using the Blaine method described in EN 196 of 100 to 30000 cm$^2$/g, preferably 500 to 20000 cm$^2$/g, more preferably 1000 to 18000 cm$^2$/g, in particular 3000 to 15000 cm$^2$/g. The determination of the surface area is performed using the Blaine method described in EN 196-6:1989.

The inventive method ensures that no unwanted discoloration (for instance a darkening) occurs during the calcining of the supplementary cementitious material or that such an unwanted discoloration at least occurs only to an acceptable extent. The unwanted discoloration occurs upon oxidation of e.g. Fe, Cr, Ti, Cu, U or Mn components, which ware usually present in supplementary cementitious materials. The oxidation only occurs, when said oxidizable components are located at the surface of the particles of the raw material of the supplementary cementitious material. The large and specific particle size according to the claimed particle size range ensures a relatively low surface area, i.e. means that only a minor portion of said oxidizable components is at the surface of the particles and thus is oxidized. Thus, the unwanted color change upon oxidation during the calcining is suppressed or only takes place to an acceptable extent.

If the average particle size is lower than the range as identified above, the unwanted color change or darkening of the cement has the negative effect that the color of the resulting concrete is shifted to a pink or a green color. For instance, such an unwanted discoloration to an unfavorable extent occurs, when employing the naturally occurring clay materials mentioned in US 2012/0055376A1, since these claim materials show relatively small average particle size. If the average particle size is higher than this range, a sufficient calcining of the raw material of the supplementary cementitious material, at least under commercially relevant calcining conditions, may not be achieved. Thus, the pozzolanic activity of the resulting supplementary cementitious material is inferior, which in turn leads to reduced mechanical properties of the cement.

Further, the subsequent milling of the calcined raw material of the supplementary cementitious material ensures that the resulting supplementary cementitious material has an average particle size that allows an improved pozzolanic activity, at all substitution rates.

A particular advantage of the method in accordance with the present invention is that the cement shows a very bright cement color and no unwanted color change. Thus, the claimed method allows the production of a cement, which has a color that is comparable or similar to a cement produced by exclusively employing Portland type cement.

Further, the method allows that the step of calcining of the raw material of the supplementary cementitious material and the step of calcining of the limestone-based raw material to produce the cement clinker can be conducted separately, i.e. in separate containers. These separate calcining steps allow a flexible process set-up and particularly ensure the possibility of producing a cement with high substitution rates of the cement clinker.

For instance, the method allows that the content of the supplementary cementitious material in the cement is higher than the substitution rate as achieved by the method disclosed in CN101913787. According to this document, the supplementary cementitious material is produced by using waste heat from the clinker cooler. The raw material of the supplementary cementitious material is distributed on top of the clinker bed in the hot end of the cooler. The energy required for drying, calcining and heating the material is provided by a drop in the secondary air temperature of up to 100°C. It is furthermore mentioned that the method can provide a substitution degree between 5 and 15 %. However, the following calculation proves that a substitution degree of higher than 6 wt% cannot be achieved.

The energy balance of the hot part of the cooler can be taken as the basis for the calculation. Input values for energy are the SCM material and the hot secondary air. Output values are the calcined SCM material and the cold secondary air. The energy balance is based on an input of 1 kg clinker/h. All other inputs are related to this as seen from Table 1, wherein all relevant input values specified.

Assuming that the system is in a steady state, the energy balance is shown in equation [1].

$$In + Generated = Out \quad [1]$$

The three terms in equation [1] can be calculated according to equations [2] to [4].

$$In = W_{sa} * Cp_{air} * T_{sa,in} + W_{SCM} * \left(1 - x_{SCM,H2O} - x_{crystal,H2O}\right) * Cp_{SCM} * T_{SCM,in} + W_{SCM} * \left(x_{SCM,H2O} + x_{crystal,H2O}\right) * Cp_{H2O} * T_{H2O,in} \quad [2]$$

$$Generated = -H_{vap,H2O} * W_{SCM} * x_{SCM,H2O} - W_{SCM} * H_{cal,SCM} * x_{crystal,H2O} \quad [3]$$

$$OUT = W_{sa} * Cp_{air} * T_{sa,out} + W_{SCM} * \left(1 - x_{SCM,H2O} - x_{crystal,H2O}\right) * Cp_{SCM} * T_{SCM,out} + W_{SCM} * \left(x_{SCM,H2O} + x_{crystal,H2O}\right) * Cp_{H2O} * T_{H2O,in} \quad [4]$$

A degree of freedom analysis shows that only the mass flow of the SCM material is unknown. By solving equation [1] for the mass flow of the SCM material, the amount of SCM material, which is added to the hot part of the calciner per mass of clinker can be obtained. In order to obtain the actual substitution degree, the amount of water (i.e. moisture and crystal water) that that leaves the calciner together with the secondary air, has to be determined. This can be achieved by equation [5], where $X_{SCM}$ designates the substitution degree of the SCM material in cooler outlet.

$$X_{SCM} = W_{SCM} * \left(1 - x_{SCM,H2O} - x_{crystal,H2O}\right) \quad [5]$$

The abbreviations used in equations [1] to [5] are identified in the following Table 1.

Table 1: Values used for calculating the SCM substitution degree described in CN101913787

| Parameter | Unit [symbol] | Value |
|---|---|---|
| Secondary air | kg/kg clinker [$W_{sa}$] | 1 |
| Mass flow of SCM | kg/kg clinker [$W_{SCM}$] | To be solved for |
| Moisture content of SCM | kg/kg clay [$X_{SCMH2O}$] | 0.05 |
| Crystal water in SCM | kg/kg clay [$X_{crystal.H2O}$] | 0.1 |
| Calcination energy of SCM | kJ/kg $H_2O$ [$H_{cal.SCM}$] | 4722 |
| Heat of evaporation water | kJ/kg [$H_{vcp,H2O}$] | 2287 |
| Heat capacity SCM material | kJ/kg/K [$Cp_{SCM}$] | 1.38 |
| Heat capacity water (liquid) | kJ/kg/K [$Cp_{H2O.1}$] | 4.2 |
| Heat capacity water (gas) | kJ/kg/K [$Cp_{H2O.g}$] | 4.2 |
| Heat capacity air | kJ/kg/K [$Cp_{air}$] | 1.2 |
| Temperature SCM in | K [$T_{SCMin}$] | 298 |

(continued)

| Parameter | Unit [symbol] | Value |
|---|---|---|
| Temperature Water in | K [$T_{H2O,in}$] | 298 |
| Temperature SCM out | K [$T_{SCM,out}$] | 1000 |
| Temperature Water out | K [$T_{H2O,out}$] | 1200 |
| Temperature secondary air in | K [$T_{sa,in}$] | 1300 |
| Temperature secondary air out | K [$T_{sa,out}$] | 1200 |

By solving equation [1] and using equation [5] for calculating the substitution degree a value of 5.78 wt % is obtained. Accordingly, the claimed method has the advantage that substitution rates of the cement clinker, particularly of 6 wt% or higher can be achieved, which are not obtainable by a method shown in CN101913787. Thus, the method can effectively produce a cement with a reduced energy consumption and $CO_2$ emission.

In a preferred embodiment of the method according to the present invention, the milling of the calcined raw material of the supplementary cementitious material and the milling of the calcined cement clinker are conducted together, which means that the milling is conducted simultaneously in the same milling device after mixing the components. This can be conducted due to the fact that the particle sizes of the calcined raw material of the supplementary cementitious material and the cement clinker are in a similar range. Such a simultaneous milling ensures a particularly efficient process set-up, which cannot be achieved by conventional methods that involve a milling of supplementary cementitious materials prior to calcining.

Alternatively, the milling of the calcined raw material of the supplementary cementitious material and the milling of the cement clinker can be conducted separately, followed by mixing the milled components. This allows a high variability of the process set-up.

It is further preferred that the calcining of the raw material of the supplementary cementitious material is conducted in a specific way, namely by heating the raw material in an reduced oxygen atmosphere and at a heating rate of 200 °C/min or less, preferably 150 °C/min or less, more preferably 100 °C/min or less to a distinct calcining temperature. This heating rate is slow, when compared to commonly used heating rates and particularly ensures that the particle size of the supplementary cementitious material of 1 to 300 mm is not reduced. This can be explained by the fact in that residual water, which is usually present in the raw material of the supplementary cementitious material slowly evaporates without destroying/delaminating the raw material particles, which would lead in the production of smaller particles size. Thus, unwanted discoloration can be prevented very effectively by employing such a heating rate. In other words, the calcination is preferably conducted slowly by employing the heating rates as specified above in order to avoid a delamination of the supplementary cementitious material, which would result in an increase in the surface area. Such a specific calcination process of the supplementary cementitious material ensures a low oxidation of the oxidizable components due to the low surface area and thus avoids unwanted discoloration/darkening of the resulting cement.

The raw material of the supplementary cementitious material may have water content of 15 wt% or less, preferably 10 wt% or less, more preferably 5wt% or less. The water content is measured by X-ray fluorescence (XRF) spectrometer. Further, the loss on ignition (LOI) is measured by heating the sample from ambient temperature of 20 °C to 1050 °C and weighing the sample before and after heating, is preferably 2-14%, preferably 3-13%, more preferably 4-12%.

In embodiments, the content of the supplementary cementitious material in the cement is 1 to 50 wt%, preferably 5 to 45 wt%, more preferably 10 to 40 wt%, most preferably 15 to 35 wt%, based on the overall content of the cement. Such high substitution rate ensures that the resulting cement is favorable in terms of environmental issues due to its reduced $CO_2$ emission during the cement production and simultaneously shows a sufficient compressive strength.

Further, the calcining retention time of the raw material of the supplementary cementitious material at the calcining temperature may be selected, depending on the particle size of the raw material of the supplementary cementitious material. The retention time for particle sizes below 20 mm is 1 to 300 minutes, preferably 3 to 200 minutes, more preferably 5 to 120 minutes, most preferably 10 to 90 minutes, The retention time for particle sizes above 20 mm is 5 to 500 minutes, preferably 7 to 300 minutes, more preferably 10 to 200 minutes, most preferably 15 to 90 minutes. This ensures a particularly effective production of the cement.

In an embodiment, the method further comprises the step of crushing the raw material of the supplementary cementitious material prior to calcining. The crushing or grinding is preferably conducted in a device that is selected from the group comprising a roller press, a jaw crusher, a hammer rusher, a cone crusher, or a combination thereof. The crushing may also be accompanied with a drying the raw material of the supplementary cementitious material prior to the calcining step. Such a process step particularly ensures that the raw material of the supplementary cementitious material can be conveniently converted by the calcining and milling steps to the final supplementary cementitious material in an economic way.

In another embodiment, the method further comprises the step of screening the raw material of the supplementary cementitious material after crushing and prior to calcining. During said screening, the raw material of the supplementary cementitious material is separated in at least two fractions, which at least differ in their average particle sizes. Preferably, the raw material of the supplementary cementitious material is separated in two fractions. One of the fractions has an average particle size in the desired range and is used for calcining. The other fraction is a second fraction that has an average particle size that is higher than the desired range. This second fraction is preferably returned up-stream and is crushed again. The second fraction to be returned is preferably less than 75 wt% of the screening feed rate, more preferably less than 50 wt%, most preferably less than 25 wt%. If more than two fractions are obtained, it is preferred that at least one of said further fractions is a third fraction that is a fine fraction having an average particle size that is lower than the desired range. However, the weight percentage of said third fraction should be as low as possible. Preferably, the weight percentage of the third faction is less than 15 wt%, more preferably less than 10 wt%, most preferably less than 5 wt%. In case, such a third fraction is unavoidable it, is preferably used as a filler in the calcined product. In embodiments, the screening is conducted in a screening unit, which is preferably a device selected from the group comprising a trommel screen, a vibrating screen, an air sieve, or a combination thereof. The screening step is particularly suitable for adjusting the average particle size and particle size distribution of the raw material of the supplementary cementitious material.

In another embodiment, the method further comprises the step of storing and/or preheating the raw material of the supplementary cementitious material prior to calcining. In an embodiment, the raw material of the supplementary cementitious material is temporally stored and/or preheated in a storage-preheating unit. It is preferred to conduct the step of storing and/or preheating the raw material of the supplementary cementitious material in a combined storage-preheating unit. However, it is also possible to conduct the steps of storing and preheating in a separate storage unit and a subsequent heat exchanger unit. Suitable devices for the storage unit are for instance a silo or a bulk storage device. A separate heat exchanger unit may be required if the raw material properties are unfavorable for integrating the drying/preheating into a combined storage-preheating unit. This may be for instance the case if the pressure drop of the storage-preheating unit would be larger than 30 mbar or if not enough space for an integrated unit is available. The heat exchanger unit is preferably a solid-gas direct-contact heat exchanger. Examples are for instance a cement cooler or a rotary dryer/rotary heat exchanger. This ensures a particularly favorable and economical process set-up under an industrial scale.

The combined storage-preheating unit is in a preferred embodiment flowed with kiln exhaust gas in order to dry and/or preheat the raw material before feeding it to the kiln. The storage-preheating unit is preferably operated counter currently in a continuous mode with the material entering at the top of the unit and the gas entering at the bottom of the unit. The superficial gas velocity in the gas inlet may be 0.1-4 m/s, preferably 0.5-2 m/s, more preferably 0.8-1.5 m/s. The temperature difference between the gas and the solid material in the bottom of storage-preheating unit may be less than 50 °C, preferably less than 25 °C, more preferably less than 10 °C. In such a way, the method can be particularly run in economically favorable way.

The method further contains in a preferred embodiment the step that the gas is directed to a gas cleaning unit after passing the heat exchanger unit or the storage-preheating unit. It is preferred that the whole kiln exhaust gas is directed through the heat exchanger unit or storage-preheating unit. If this should not be possible, only a fraction of the gas may be directed through the heat exchanger unit or storage-preheating unit and the other fraction of the gas may be directed to a gas cleaning unit without passing the heat exchanger unit or storage-preheating unit. Such an embodiment facilitates the production of cleaned exhaust gas and ensures that the method complies with all ecological requirements. The gas cleaning unit comprises in embodiments at least a dust/gas separation unit, but if required also other units in order to comply with any regulatory demands. The exhaust gas cleaning is preferably kept at a minimum by integrating the cleaning in other units, for instance, by optimizing the calcining temperature (without compromising the product quality) or by adding one or more absorbents to the process in order to reduce the emissions of, for instance, $SO_2$. Suitable devices for the gas cleaning unit may be selected from the group comprising a bag filter, an electro filter, a scrubber, an activated coal unit, a catalytic reduction unit, an absorbent unit, or a combination thereof.

In a further embodiment, the method is a continuous process, wherein the step of calcining the raw material of the supplementary cementitious material is conducted in a kiln. The use of a kiln particularly ensures the provision of sufficient time and energy for conducting the calcination reaction. This allows an economically favorable calcining. The kiln may be preferably a rotary kiln and/or a vertical shaft kiln. In order to improve the heat transfer, the kiln may be equipped also with one or more supplementary devices for improving the heat transfer, for instance lifters or dams.

The kiln may be in embodiments a kiln with internal combustion, such as a conventional rotary kiln of a cement clinker production line. This is advantageous, since investments in other production plants are avoided. The first method in accordance can be present invention can be particularly conducted in such a conventional kiln with internal combustion due to the fact that the claimed method requires a specific calcining temperature range in combination with a specific average particle size and particle size distribution. This adjustment ensures that the quality of the supplementary cementitious material is still excellent, despite of the fact that the temperature conditions is such a conventional kiln may not be controllable in a way that temperatures exceeding 980 °C can be clearly avoided.

The kiln is preferably operated so that the oxygen concentration in the kiln outlet is 0-10 vol%, preferably 0-5 vol%, more preferably 0-2 vol%. This ensures a particular favorable calcination process from an economical point of view.

However, the claimed method is not limited to conventional kilns with internal combustion. It is rather preferred that the calcining of the raw material of the supplementary cementitious material is conducted in a kiln with a separate combustion unit and/or heating unit. The combustion unit and/or heating unit are preferably located next to the kiln. This is favorable from an economic and ecologic point of view, since it ensures that the temperature of kiln inlet gas is as high as possible with a minimum of energy loss.

The separate combustion unit is a unit, wherein hot gas is generated by combustion of a fuel. The hot gas is subsequently transferred to the kiln. The combustion unit is preferably a standalone unit that is in embodiments a device selected from the group comprising a grate furnace, a rotary kiln, a fluidized bed, or a combination thereof. A separate combustion unit is associated with the advantage that it enables the control of the kiln inlet temperature of the generated gas within a very narrow interval, such as less than 100 °C, preferably less than 50 °C, more preferably less than 25 °C. In consequence, the quality of the supplementary cementitious material can be further improved. Further, a separate combustion unit enables the use of a broader range of fuels, for instance, natural gas, coal, wood and municipality waste, which potentially all can be combusted in the same combustion unit. The use of such a variety of fuels is not possible, when using a conventional kiln with an internal combustion, since for instance coal would negatively affect the mechanical and optical properties of the SCM and the resulting cement. Further, the product quality is not compromised by fuel residues, caused by fuel that has only been partly burned.

The gas required for the combustion unit is preferably supplied from a cooler (see below). Such an embodiment is associated with the saving of energy and additionally ensures a favorably high exhaust gas temperature. However, the gas to be supplied can be any other gas source that is rich in oxygen. The adjustment of the kiln inlet temperature may be particularly achieved by mixing hot gas from the combustion unit with e.g. exit gas from the kiln and/or ambient air (or any other gas with a temperature that is lower than the calcination temperature).

In addition to or as an alternative to a combustion unit, a separate heating unit may be used for producing a hot gas that constitutes the kiln inlet gas. The energy required for operating the heating unit is e.g. electrical energy but may also be a hot gas from any other process. The heating unit is characterized in that no gas is generated by combustion. Thus, it is preferred in such an embodiment that the kiln outlet gas is directed to the heating unit as the inlet gas, because oxygen is not required, opposite to the combustion unit. Further, the fact that the heating unit does not generate gas has the advantage that the kiln exhaust gas stream to the storage-preheating unit can be significantly reduced. The heating unit is also a standalone unit and is preferably a device selected from the group comprising an electrical furnace, a solar tower, a waste heat device, a plasma burner, or a combination thereof.

If the step of calcining the raw material of the supplementary cementitious material is conducted in a kiln with a separate combustion unit and/or heating unit, it is preferred that the method further comprises the step of adjusting the temperature of the gas produced in said separate combustion unit and/or heating unit. Said temperature adjusting step is preferably conducted in a mixing chamber. The mixing chamber may be conveniently used for conditioning the kiln inlet gas, so that the desired gas temperature can be easily and accurately adjusted. The mixing chamber can particularly ensure an even cross-sectional temperature profile, which may vary with less than 100 °C, preferably 50 °C, more preferably 10 °C.

The mixing chamber may be a separate unit and may be a device selected from e.g. a static mixer and/or a pipeline with bends. However, the present invention also encompasses the embodiment that the mixing chamber is included in the combustion unit and/or heating unit. This means that the kiln exhaust gas and/or air are directly feed to the combustion unit/heating unit. This embodiment has the advantage that material wear caused by the high temperatures is significantly reduced.

It is preferred that the mixing chamber is supplied with air, which may in embodiments selected from ambient air, cooler excess air, exhaust gas, heat exchanged air, excess gas from another production process, or a combination thereof. It is preferred that the kiln inlet gas temperature is 100-1000 °C higher than the air temperature, preferably, 200-800 °C higher, more preferably 300-500 °C higher.

In another embodiment, the method further comprises the step of cooling the supplementary cementitious material after calcining. The cooling is preferably conducted with a cement cooler and/or a rotary heat exchanger, wherein the cooler exhaust gas is preferably returned up-stream as discussed above.

The cooling is preferably conducted with gas with an oxygen content ranging between 0 and 21 wt%, preferably ambient air, when a combustion unit is used for heating the kiln. In case of heating the kiln with a separate heating unit, the preferred gas for cooling is kiln outlet gas. The hot gas obtained from cooling the SCM may be directed to the kiln, the combustion unit or the heating unit, depending on the production method. The cooler exhaust gas may be 300-900 °C, preferably 500-900 °C, more preferably 700-900 °C. The SCM leaving the cooler has in embodiments a temperature of 50-350 °C, preferably 50-200 °C, more preferably 50-150 °C.

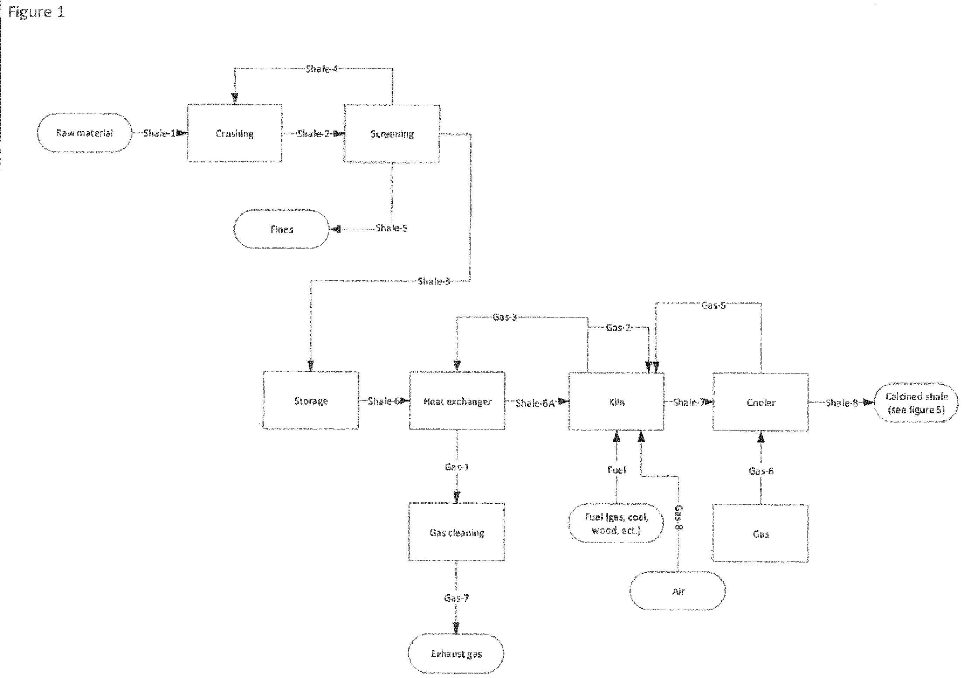

Specific embodiments of the inventive method are illustrated in Figures 1 to 6.

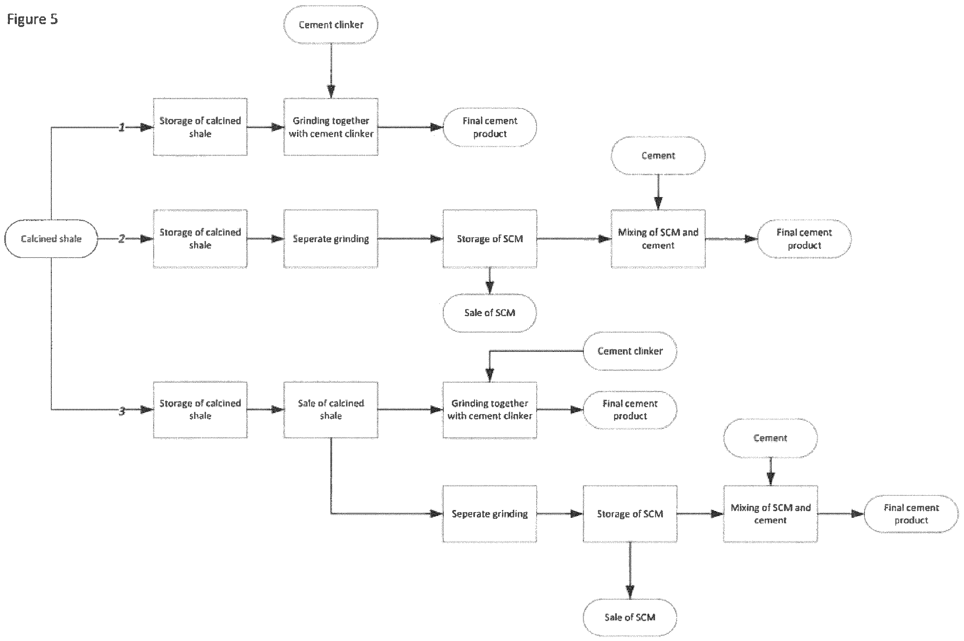

Figure 1 illustrates an embodiment of the inventive method, which is conducted by using a conventional kiln comprising an internal combustion. The raw material of the supplementary cementitious material ("raw material") is transferred ("shale-1") to a crushing unit ("crushing") and crushed. After the crushing step, the crushed raw material of the supplementary cementitious material ("shale-2") is transferred to a screening unit ("screening"), where it is separated into three fractions. The first fraction ("shale-3") is a fraction that shows the required particle size range and particle size distribution. The second fraction ("shale-4") has an average particle size that is higher than the required range. The second fraction is transferred back to the crushing unit for further crushing. The third fraction ("shale-5") is a fraction having an average particle size that is lower than the required range. Said fraction is designated as "fines" and may be used as a filler. The first fraction ("shale-3") is transferred to a storage unit ("storage"). After storing, the material ("shale-6") is transferred to a heat exchanger unit ("heat exchanger"). In the heat exchanger unit, the raw material of the supplementary cementitious material is heat treated by kiln exhaust gas ("gas-3"). The exhaust gas of the heat exchanger unit ("gas-1") is transferred to a gas cleaning unit ("gas cleaning"), wherein it is cleaned. The cleaned exhaust gas ("gas-7") exits the process. The dried and heat treated raw material of the supplementary cementitious material ("shale-6A") is transferred to the calcination unit ("kiln") for calcination. The calcination unit is a conventional kiln with internal combustion of fuel, such as natural gas or coal. The calcination conditions and particularly the kiln temperature are adjusted by adding kiln exhaust gas ("gas-2") and/or ambient air ("gas-8") to the kiln. Further, the calcination conditions are adjusted by adding the cooler exhaust gas ("gas-5"). The cooler exhaust gas ("gas-5") can also be used as the main oxygen supply for the combustion process. Subsequently, the hot calcined supplementary cementitious material ("shale-7") is transferred into a cooler unit ("cooler"), wherein the temperature of the calcined product is reduced. The cooling is conducted by blowing gas with an oxygen content between 0 and 21 % ("gas-6") in the cooling unit. After cooling, the supplementary cementitious material ("shale-8") is transferred out of the cooler for further processing (which is further illustrated in Figure 5).

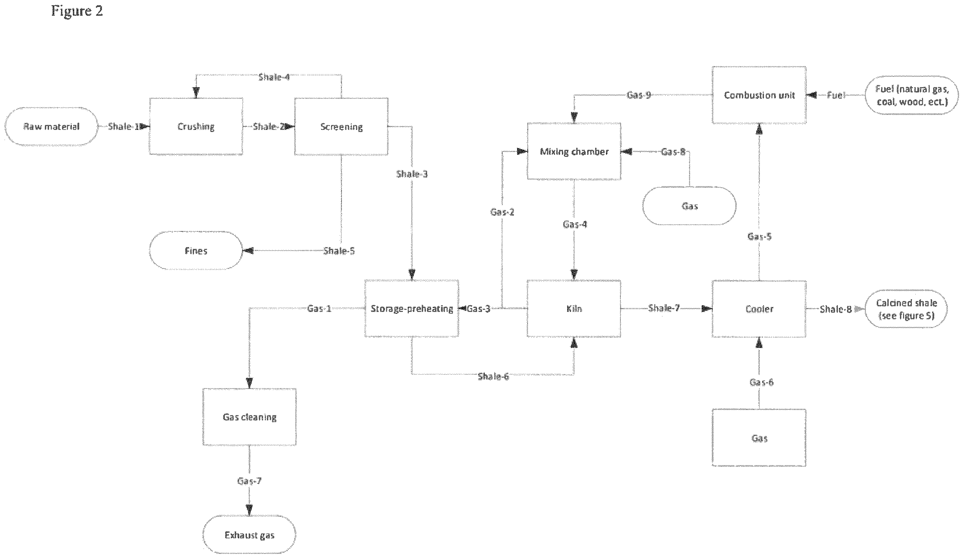

The embodiment of the claimed method in accordance with Figure 2 corresponds to the method shown in Figure 1, with the following exceptions. Firstly, the method according to Figure 2 is a method, wherein the storage and preheating steps are conducted in a combined storage-preheating unit. Secondly, the method according to Figure 2 is a method, wherein the calcining of the raw material of the supplementary cementitious material is conducted by employing a kiln with a separate combustion unit.

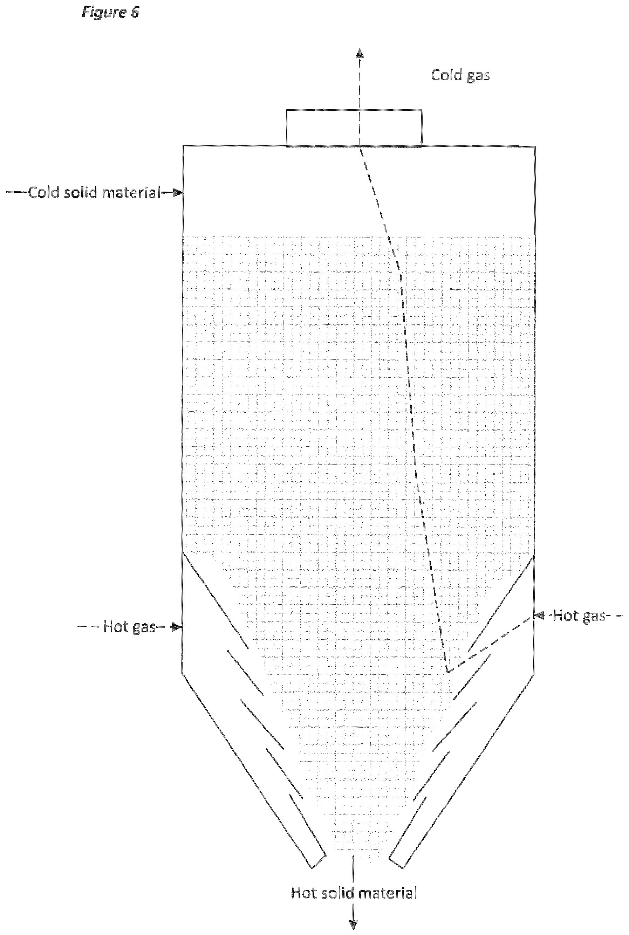

In particular, the method according to Figure 2 is conducted as follows: The raw material of the supplementary cementitious material ("raw material") is transferred ("shale-1") to a crushing unit ("crushing") and crushed. After the crushing step, the crushed raw material of the supplementary cementitious material ("shale-2") is transferred to a screening unit ("screening"), where it is separated into three fractions. The first fraction ("shale-3") is a fraction that shows the required average particle size range and particle size distribution. The second fraction ("shale-4") has an average particle size that is higher than the required range. The second fraction is transferred back to the crushing unit for further crushing. The third fraction ("shale-5") is a fraction having an average particle size that is lower than the required range. Said fraction is designated as "fines" and may be used as a filler. The first fraction ("shale-3") is transferred to a combined storage/preheating unit ("storage-preheating"), wherein the raw material of the supplementary cementitious material is stored and dried and/or heat treated by kiln exhaust gas ("gas-3"). Such a combined storage/preheating unit is further illustrated in Figure 6 (see below). The exhaust gas of the storage/preheating unit ("gas-1") is transferred to a gas cleaning unit ("gas cleaning"), wherein it is cleaned. The cleaned exhaust gas ("gas-7") exits the process. The dried and/or heat treated raw material of the supplementary cementitious material ("shale-6") is transferred to the calcination unit ("kiln") for calcination. The calcination unit is a kiln with an external and separate combustion unit. The cooler exhaust gas ("gas-5") is used as the oxygen supply for the combustion process. The combustion unit may run with a variety of fuels, such as natural gas, coal, wood, etc. The combustion unit produces hot gas ("gas-9") with a temperature of at least 1000 °C, which is transferred after the combustion in a mixing chamber. The gas temperature is adjusted in the mixing chamber by adding kiln exhaust gas ("gas-2") and/or ambient air ("gas-8"). After adjusting the gas temperature, the kiln inlet gas ("gas-4") with a temperature of 980 °C or less is transferred into the kiln for calcining. The calcined supplementary cementitious material ("shale-7") is transferred into a cooler unit ("cooler"), wherein the temperature of the calcined product is reduced. The cooling is conducted by blowing gas with an oxygen content between 0-21 % ("gas-6") in the cooling unit. After cooling, the supplementary cementitious material ("shale-8") is transferred out of the cooler for further processing (which is further illustrated in Figure 5).

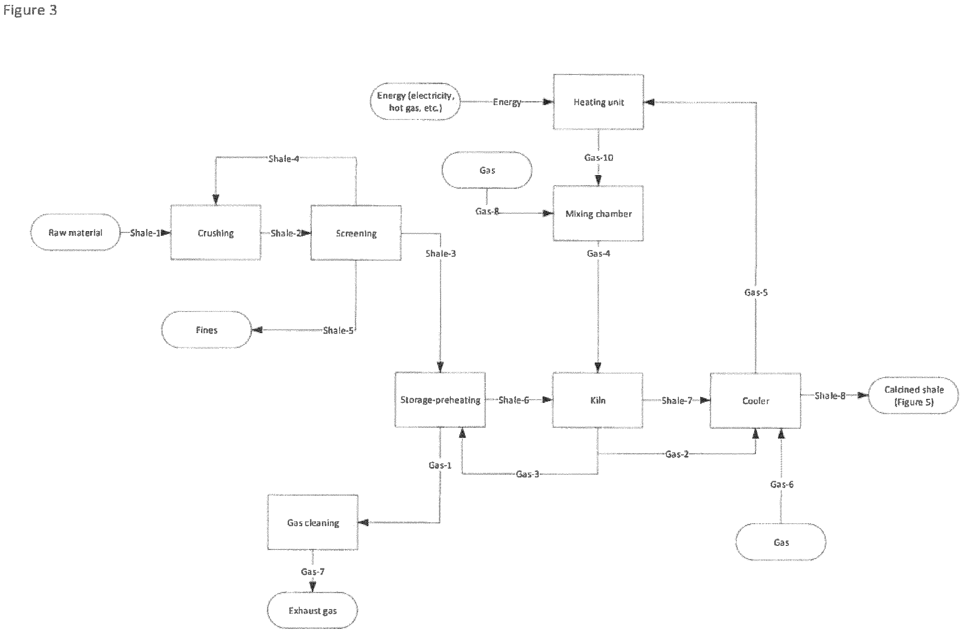

Figure 3 is an embodiment of the inventive method, which corresponds to a method according to Figure 2, but which employs a separate heating unit instead of a separate combustion unit.

In particular, the method according to Figure 3 is conducted as follows: The raw material of the supplementary cementitious material ("raw material") is transferred ("shale-1") to a crushing unit ("crushing") and crushed. After the crushing step, the crushed raw material of the supplementary cementitious material ("shale-2") is transferred to a screening unit ("screening"), where it is separated into three fractions. The first fraction ("shale-3") is a fraction that shows the required average particle size range and particle size distribution. The second fraction ("shale-4") has an average particle size that is higher than the required range. The second fraction is transferred back to the crushing unit for further crushing. The third fraction ("shale-5") is a fraction having an average particle size that is lower than the required range. Said fraction is designated as "fines" and may be used as a filler. The first fraction ("shale-3") is transferred to a combined storage/preheating unit ("storage-preheating"), wherein the raw material of the supplementary cementitious material is stored and dried and heat treated by kiln exhaust gas ("gas-3"). Such a combined storage/preheating unit is further illustrated in Figure 6 (see below). The exhaust gas of the storage/preheating unit ("gas-1") is transferred to a gas cleaning unit ("gas cleaning"), wherein it is cleaned. The cleaned exhaust gas ("gas-7") exits the process. The dried and heat treated raw material of the supplementary cementitious material ("shale-6") is transferred to the calcination unit ("kiln") for calcination. The calcination unit is a kiln with an external and separate heating unit. The heating unit may run with electricity or hot gas, etc, but does not require a combustion of fuel. The heating unit inlet gas is cooler exhaust gas ("gas-5"). The heating unit produces hot gas ("gas-10") with a temperature of approximately 1000 °C, which is transferred to a mixing chamber. The gas temperature is adjusted in the mixing chamber by adding ambient air ("gas-8"). After adjusting the gas temperature, kiln inlet gas ("gas-4") with a temperature of 980 °C or less is transferred into the kiln for calcining. The calcined supplementary cementitious material ("shale-7") is transferred to a cooler unit ("cooler"), wherein the temperature of the calcined product is reduced. The cooling is conducted by blowing gas with an oxygen content between 0-21 % ("gas-6") into the cooling unit. After cooling, the supplementary cementitious material ("shale-8") is transferred out of the cooler for further processing (which is further illustrated in Figure 5).

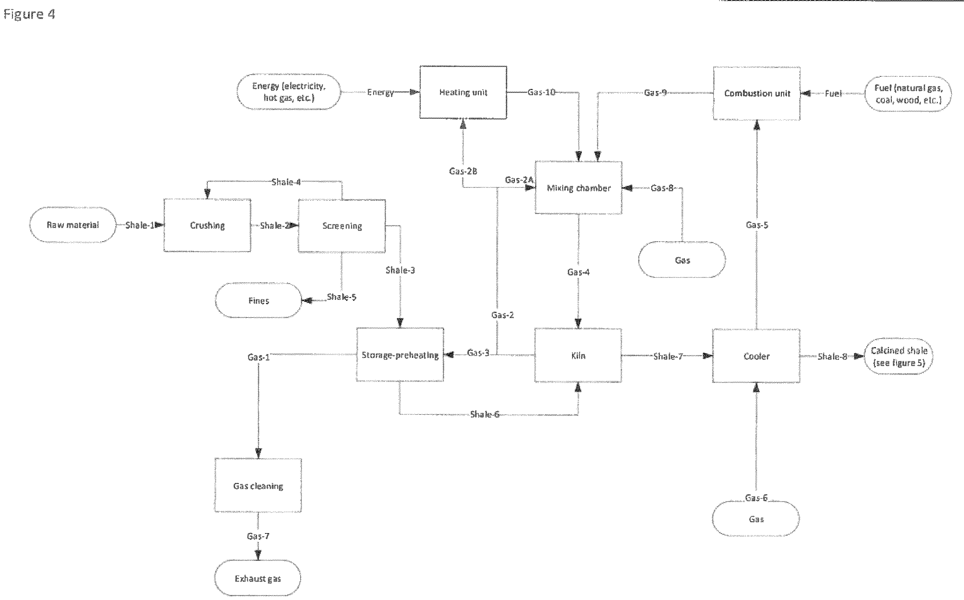

Figure 4, is an embodiment of the inventive method, which employs a combination of a separate heating unit and a separate combustion unit.

In particular, the method according to Figure 4 is conducted as follows: The raw material of the supplementary cementitious material ("raw material") is transferred ("shale-1") to a crushing unit ("crushing") crushed. After the crushing step, the crushed raw material of the supplementary cementitious material ("shale-2") is transferred into a screening unit ("screening"), where it is separated into three fractions. The first fraction ("shale-3") is a fraction that shows the required average particle size range and particle size distribution. The second fraction ("shale-4") has an average particle size that is higher than the required range. The second fraction is transferred back to the crushing unit for further crushing. The third fraction ("shale-5") is a fraction having an average particle size that is lower than the required range. Said fraction is designated as "fines" and may be used as a filler. The first fraction ("shale-3") is transferred to a combined storage/preheating unit ("storage-preheating"), wherein the raw material of the supplementary cementitious material is stored and dried/heat treated by kiln exhaust gas ("gas-3"). Such a combined storage/preheating unit is further illustrated in Figure 6 (see below). The exhaust gas of the storage/preheating unit ("gas-1") is transferred to a gas cleaning unit ("gas cleaning"), wherein it is cleaned. The cleaned exhaust gas ("gas-7") exits the process. The dried/heat treated raw material of the supplementary cementitious material ("shale-6") is transferred to the calcination unit ("kiln") for calcination. The calcination unit is a kiln with a combination of a separate combustion unit and a separate heating unit. The combustion unit is operated by using the cooler exhaust gas ("gas-5") as the oxygen supply for the combustion process. The combustion unit may run with a variety of fuels, such as natural gas, coal, wood, etc. The combustion unit produces hot gas ("gas-9") with a temperature of at least 1000 °C, which is transferred to the mixing chamber. The separate heating unit runs with electricity or hot gas, etc, but does not require a combustion of fuel. The heating unit produces hot gas ("gas-10") with a temperature of at least 1000 °C, which is also transferred to mixing chamber. The heating unit inlet gas ("gas-2B") is a fraction of the kiln exhaust gas ("gas-2"). The other fraction of the kiln exhaust gas ("gas-2A") is used for adjusting the gas temperature in the mixing chamber. In addition or alternatively thereto, the gas temperature in the mixing chamber is adjusted by adding ambient air ("gas-8"). After adjusting the gas temperature, the kiln inlet gas ("gas-4") with a temperature of 980 °C or less is transferred to the kiln for calcining. The calcined supplementary cementitious material ("shale-7") is transferred into a cooler unit ("cooler"), wherein the temperature of the calcined product is reduced. The cooling is conducted by blowing gas with an oxygen content between 0 and 21 % ("gas-6") into the cooling unit. After cooling, the supplementary cementitious material ("shale-8") is transferred out of the cooler for further processing (which is further illustrated in Figure 5).

Figure 5 shows three ways how the supplementary cementitious material can be converted into the final cement product. The storage unit for storing the supplementary cementitious material as shown in Figure 5 is not required, but is preferred from a practical point of view. The first opportunity (1) is to directly milled the supplementary cementitious material after production together with cement clinker to obtain a final cement product. The second opportunity (2) is a separate milling of the supplementary cementitious material in a milling step and subsequently mixing the supplementary cementitious material with the cement, resulting in the final cement product. The third opportunity (3) is to sale the supplementary cementitious material before conducting further procedures according to opportunity (1) or opportunity (2). The advantage of opportunity (3) that the calcined shale is less sensitive to moisture, when compared to a milled product. The milling with a cement clinker or in a separate milling step can take place in another location than the product location.

Figure 6 is a schematic view of an embodiment of a combined storage-preheating unit, which is configured as a tube with a conical lower end. According to this embodiment, the combined storage-preheating unit is operated in that cold solid material is added to a top end opening of the unit. The material slowly passes the unit downwards and exits the unit at an opening at the conical lower end. Hot gas is added counter-currently at a lower end of the unit and thereby heats the solid material. The cold gas exits the unit trough an opening at an upper end of the unit. The hot gas may be e.g. kiln exhaust gas ("gas-3"). The processing speed is adjusted by the diameter of the opening for the hot solid material at the conical lower end of the unit. The storage-preheating unit stores and simultaneously preheats the raw material of the supplementary cementitious material before it is transferred to the kiln for calcining.

The advantages and embodiments are discussed above in connection with the first method according to the present invention. However, these advantages and embodiments likewise apply to the second method according to the present invention unless otherwise specified in the following.

The second method for producing a cement comprising milled cement clinker and a supplementary cementitious material in accordance with the present invention comprises the steps of: producing the milled cement clinker by a clinkerization process, comprising the steps of calcining and subsequently milling a limestone-based raw material; producing the supplementary cementitious material by calcining a raw material of the supplementary cementitious material at a temperature of less than 980°C and subsequently milling the calcined raw material of the supplementary cementitious material, wherein the raw material of the supplementary cementitious material has an average particle size of 1 to 300 mm; and blending the milled cement clinker and the supplementary cementitious material; wherein the method is a continuous process comprising the step of calcining the raw material of the supplementary cementitious material in a kiln with a separate heating unit and/or combustion unit.

In other words, the second method differs from the first method in that it does not require a particle size distribution in that at least 5 wt% of the particles have a particle size of above 4.75 mm. Instead, it is required for the second method that the method is a continuous process comprising the step of calcining the raw material of the supplementary cementitious material in a kiln with a separate heating unit and/or combustion unit. By conducting the second method in such a way, it is possible to achieve the advantageous properties as identified above in connection with the first method, even if the particles of the raw material supplementary cementitious material do not require that least 5 wt% of the particles have a particle size of above 4.75 mm. This can be explained by the fact that calcining the raw material of the supplementary cementitious material in a kiln with a separate heating unit and/or combustion unit enables a particularly favorable adjustment of the calcining temperature of less than 980°C. Such a process set-up for instance has the advantage that temperature peaks of above 980 °C, which may occur when that calcining is conducted in a conventional kiln with internal combustion, can be clearly avoided. Such temperature peaks leads to a deterioration of properties the SCM material, such as the color properties and the mineralogy of the calcined product. In turn, the favorable optical and mechanical properties of the resulting cement are also achieved, when producing the content in accordance with the second method.

The present invention also concerns a cement comprising milled cement clinker and a supplementary cementitious material, wherein the cement is obtainable by any of the methods as defined above. The cement that is obtainable by these methods has unique product properties, which cannot be achieved by conventionally known methods.

In particular, the cement comprises milled cement clinker and a supplementary cementitious material, wherein the supplementary cementitious material comprises an amorphous constituent in more than 30 wt%. Preferably, the amorphous constituent is present in more than 40 wt%, more preferably in more than 50 wt%, most preferably in more than 65 wt%. The term "amorphous constituent" in terms of the present application is defined as one or more components of the supplementary cementitious material that show an amorphous microstructure, i.e. that do not have any crystallinity. The weight percentage of the amorphous constituent can be measured by XRD through the Rietveld method. Alternatively, solid-state nuclear magnetic resonance (NMR) spectroscopy can be applied to determine the amorphous content. The amorphous constituent actively participates in the pozzolanic reaction. Thus, such a high amount of amorphous constituents in the SCM ensures a superior pozzolanic activity in the cement and results in favorable mechanical properties, such as an improved compression strength.

The present inventors found that the amount of amorphous constituents in the SCM is strongly affected by the calcining temperature as well as the average particle size and the particle sizer distribution as discussed above. In particular, it is important during the calcining process that times, where the calcining temperature of above 980 °C should be kept as short as possible. In embodiments, such times, where the calcining temperature even shortly is above 980 °C, should be avoided at all. Even very short times result in an overheating or overburning that reduces the amount of active amorphous constituents and increases the formation of inert crystalline components that do not show a sufficient pozzolanic activity.

The following table illustrates the mineralogical changes of common clay minerals induced during different calcination temperature as observed by XRD. The specific calcination temperature of course depends on the initial mineralogy, but it can be generally stated that kaolin, smectite and illite group minerals have calcination temperatures of approximately 700, 800 and 900 °C, respectively.

| Mineral in raw material | Mineral during optimal calcination (700-900 °C) | Mineral Overheated (inert components) |
|---|---|---|
| Kaolin group (e.g. kaolinite, dickite, halloysite, and nacrite) | Metakaolin (amorphous in XRD) | Mullite, spinel group (e.g. spinel, Hercynite), Feldspars (e.g. Albite, Anorthite, Orthoclase) |
| Smectite group (e.g. montmorillonite, saponite, nontronite and beidellite) | Amorphous in XRD. Most commonly name: arcillite | Diopside, Wollastonite, Feldspars (e.g. Albite, Anorthite, Orthoclase), Cordierite |
| Illite group (e.g. illite) | Amorphous in XRD. Most commonly name: arcillite | Diopside, Wollastonite, Feldspars (e.g. Albite, Anorthite, Orthoclase) |
| Chlorite group (e.g. chamosite, clinochlore, donbassite) | Amorphous in XRD | Micas (e.g. biotite, muscovite), Diopside, Wollastonite, Feldspars (e.g. Albite, Anorthite, Orthoclase) |

In order to achieve the desired properties of the cement, it is further necessary that the supplementary cementitious material comprises less than 70 wt% of inert components selected from the group comprising mullite, spinel, feldspar, diopside, mica, or combinations thereof. In embodiments, the supplementary cementitious material has less than 50 wt%, preferably less than 40 wt%, more preferably less than 30 wt%, of said inert components. This ensures a favorable pozzolanic activity of the SCM and improved optical and mechanical properties of the resulting cement.

Further, it is preferable that the raw material of the supplementary cementitious material comprises at least 35 wt% clay minerals selected from the kaolin group, the smectite group, the illite group or the chlorite group, or combinations thereof. Such a raw material can particularly ensure that the required properties are achieved.

The color of the cement is in the range of 130-160, 130-160, 120-160. and preferably in the range of 130-150, 130-150, 120-150, wherein the measurement of the cement color is conducted by a RGB2 colorimeter. In particular, the measurement of the cement color may be conducted by a handheld RGB2 colorimeter from PCE Instruments™. The measurements are made on hardened concrete prims. Colors are referenced to a RGB scale of 0 to 255, wherein 100% cement has RGB color values in the range of 130-135, 130-135, 120-125.

Overall, the advantages of the cement in accordance with the present invention are that it can be produced with reduced $CO_2$ emission and energy consumption, shows a high substitution rate of the milled cement clinker, and has a reduced unwanted discoloration and increased mechanical properties, such as compression strength, when compared to other substituted cements.

Examples:

The advantageous effects of the present invention are demonstrated by the following examples.

The following materials were employed:

Portland cement, having the following composition: $SiO_2$ 21.5 wt%, $Al_2O_3$ 3.8 wt%, $Fe_2O_3$ 3.8 wt%, CaO 64.3 wt%, MgO 0.8 wt%, $SO_3$ 2.6, $Na_2O$ 0.1 wt%, $K_2O$ 1.1, $TiO_2$ 0.1 wt%; LOI 2.1 wt%, particle size 75 $\mu$m, Blaine 395 m$^2$/kg. Supplier: Cementos Avellaneda, Argentina.

Raw material for SCM 1: A SCM material with a composition of $SiO_2$ 55.9 wt%, $Al_2O_3$ 16.2 wt%, $Fe_2O_3$ 12.0 wt%, CaO 4.9 wt%, MgO 1.8 wt%, $SO_3$ 0.1, $Na_2O$ 0.1 wt%, $K_2O$ 3.3, $TiO_2$ 0.5 wt%; LOI 5.2 wt%.

Raw material for SCM 2: A SCM material with a composition of $SiO_2$ 51.6 wt%, $Al_2O_3$ 18.4 wt%, $Fe_2O_3$ 14.0 wt%, CaO 3.9 wt%, MgO 2.2 wt%, $SO_3$ 0.1, $Na_2O$ 0.1 wt%, $K_2O$ 4.4, $TiO_2$ 0.6 wt%; LOI 4.6 wt%.

The content of Fe, Cr, Ti, Cu, U or Mn components in the raw material SCM 1 is $Fe_2O_3$ 12.0 wt%, Cr 350 parts per million (ppm), $TiO_2$ 0.5 wt%, Cu 90 ppm, U 10 ppm, Mn 0.02 wt% and in SCM 2 $Fe_2O_3$ 14.0 wt%, Cr 240 parts per million (ppm), $TiO_2$ 0.6 wt%, Cu 80 ppm, U 8 ppm, Mn 0.02 wt%.

The following analytical measurements were conducted:

Average particle size: The average particle size is the arithmetic average particle size as measured according to ASTM C 430-96(2003).

Particle size distribution: The particle size distribution was determined by sieving.

The content of Fe, Cr, Ti, Cu, U or Mn components etc. in the raw materials SCM 1 and SCM 2 was determined by XRF. Trace components, such as Cr or U, can also be detected by IPC-MS.

Compressive strength: The compressive strength was measured according to EN 197-1:2000 for 1, 3, 7, and 28 days, respectively.

Cement color: Measurement device: Handheld RGB2 colorimeter from PCE Instruments™. The measurement of the cement color was conducted on hardened concrete prims. Colors are referenced to a RGB scale of 0 to 255.

Example 1:

A cement was produced by the following method: Milled Portland cement clinker (i.e. "Portland cement") was prepared by milling clinkers with a composition of $SiO_2$ 21.5 wt%, $Al_3O_3$ 3.8 wt%, $Fe_2O_3$ 3.8 wt%, CaO 64.3 wt%, MgO 0.8 wt%, $SO_3$ 2.6, $Na_2O$ 0.1 wt%, $K_2O$ 1.1, $TiO_2$ 0.1, wt% LOI 2.1 wt%, in a ball mill to particles having a particle size of 75 μm. Separately, a calcined supplementary cementitious material was prepared by employing as raw material of SCM 1, having an average particle size of 12 mm. The SCM 1 had a particle size distribution in that over 5 wt% of the particles are larger than 4.75 mm. The calcining was conducted at 950 °C in a rotary kiln with internal combustion at a heating rate of 100 °C with a retention time of 45 minutes, Subsequently, the calcined raw material of the supplementary cementitious material SCM 1 was prepared by milling in a ball mill to a particle size of 45 μm. Then, the milled cement clinker and the supplementary cementitious material SCM 1 were blended during compressive strength testing in a ratio of 70 wt% to 30 wt% to obtain a cement.

Example 2:

A cement was produced by the following method: Milled Portland cement clinker (i.e. "Portland cement") was prepared by milling clinkers with a composition of $SiO_2$ 21.5 wt%, $Al_2O_3$ 3.8 wt%, $Fe_2O_3$ 3.8 wt%, CaO 64.3 wt%, MgO 0.8 wt%, $SO_3$ 2.6, $Na_2O$ 0.1 wt%, $K_2O$ 1.1, $TiO_2$ 0.1 wt%, LOI 2.1 wt%, in a ball mill to particles having a particle size of 75 μm. Separately, a calcined supplementary cementitious material was prepared by employing as raw material of SCM 2, having a particle size of 1 mm. The SCM 2 had a particle size distribution in that over 5 wt% of the particles are larger than 4.75 mm. The calcining was conducted at 950 °C in a rotary kiln with internal combustion at a heating rate of 100 °C with a retention time of 45 minutes. Subsequently, the calcined raw material of the supplementary cementitious material SCM 2 was prepared by milling in a ball mill to a particle size of 45 μm. Then, the milled cement clinker and the supplementary cementitious material SCM 2 were blended during compressive strength testing in a ratio of 70 wt% to 30 wt% to obtain a cement.

Example 3:

A cement was produced in analogy to Example 2, with the exception that the supplementary cementitious material SMC 2 had a particle size of 3 mm. The SCM 2 had a particle size distribution in that over 5 wt% of the particles are larger than 4.75 mm.

Example 4:

A cement was produced in analogy to Example 2, with the exception that the supplementary cementitious material SCM 2 had a particle size of 12 mm and was blended in a ratio of 90 wt% to 10 wt% (Portland cement: SCM). The SCM 2 had a particle size distribution in that over 5 wt% of the particles are larger than 4.75 mm.

Example 5:

A cement was produced in analogy to Example 2, with the exception that the supplementary cementitious material SCM 2 had a particle size of 12 mm and was blended in a ratio of 80 wt% to 20 wt% (Portland cement: SCM). The SCM 2 had a particle size distribution in that over 5 wt% of the particles are larger than 4.75 mm.

Example 6:

A cement was produced in analogy to Example 2, with the exception that the supplementary cementitious material SCM 2 had a particle size of 12 mm and was blended in a ratio of 70 wt% to 30 wt% (Portland cement: SCM). The SCM 2 had a particle size distribution in that over 5 wt% of the particles are larger than 4.75 mm.

Comparative Example 1:

A pure Portland cement was produced in analogy to Example 1 to 6, which the exception that no supplementary cementitious material was present.

Comparative Example 2:

A cement was produced in analogy to Example 1, which the exception that the particle size of the SCM 1 was 45 $\mu$m.

Comparative Example 3:

A cement was produced in analogy to Example 2, which the exception that the particle size of the SCM 2 was 45 $\mu$m and that the ratio was 90 wt% to 10 wt%.

Comparative Example 4:

A cement was produced in analogy to Example 2, which the exception that the particle size of the SCM 2 was 45 $\mu$m and that the ratio was 70 wt% to 30 wt%.

Compression strength results:

| Ex. | SCM type | Ratio [wt%] | SCM average raw material particle size [mm] | Compression strength [MPa] after 1 day | Compression strength [MPa] after 3 days | Compression strength [MPa] after 7 days | Compression strength [MPa] after 28 days |
|---|---|---|---|---|---|---|---|
| Ex. 1 | SCM1 | 70:30 | 12 | 13.4 | 21.6 | 30.2 | 45.3 |
| Ex. 2 | SCM2 | 70:30 | 1 | 12.1 | 22.4 | 30.4 | 39.7 |
| Ex. 3 | SCM2 | 70:30 | 3 | 13.5 | 23.5 | 32.3 | 47.7 |
| Ex. 4 | SCM2 | 90:10 | 12 | 13.4 | 29.8 | 38.7 | 55.0 |
| Ex. 5 | SCM2 | 80:20 | 12 | 10.3 | 23.0 | 33.1 | 42.9 |
| Ex. 6 | SCM2 | 70:30 | 12 | 10.3 | 21.1 | 28.1 | 39.4 |
| Comp. Ex. 1 | - | 100:0 | - | 17.6 | 34.4 | 44.0 | 55.5 |
| Comp. Ex. 2 | SCM1 | 70:30 | 0.045 | 11.4 | 19.2 | 26.8 | 29.1 |
| Comp. Ex 3 | SCM2 | 90:10 | 0.045 | 12.7 | 29.5 | 37.1 | 51.3 |
| Comp Ex. 4 | SCM2 | 70:30 | 0.045 | 10.9 | 21.2 | 29.8 | 42.3 |

This data clearly shows that the compression strength of Example 1, employing a cement in accordance with the present invention, is higher than the compression strength as achieved in Comparative Example 2. Likewise, the compressive strength of Examples 2 and 4 is higher than that of Comparative Examples 4 and 3, respectively. Further, the compression strength is in embodiments (Example 4, 28 days) even comparable to comparable to unsubstituted Portland cement (Comparative Example 1).

Cement color results:

| Ex. | RGB color data | |
|---|---|---|
| Ex. 1 | 145, 142, 140 | |
| Comp Ex. 1 | 132,133,124 | |
| Comp. Ex. 2 | 175, 162, 155 | |

Further, it was confirmed that the color values of Example 6, comprising SCM particles with an average particle size of 12 mm, are superior, when compared to those of Examples 1 and 2, comprising SCM particles with an average particle size of 1 and 3 mm, respectively.

The exemplary color data demonstrates that concrete samples, which were prepared by a method in accordance with the present invention, did not show an unwanted discoloration.

**Claims**

1. Method for producing a cement comprising milled cement clinker and a supplementary cementitious material, wherein the method comprises the steps of:

   producing the milled cement clinker by a clinkerization process, comprising the steps of calcining and subsequently milling a limestone-based raw material;
   producing the supplementary cementitious material by calcining a raw material of the supplementary cementitious material at a temperature of less than 980°C and subsequently milling the calcined raw material of the supplementary cementitious material, wherein the raw material of the supplementary cementitious material has an average particle size of 1 to 300 mm, wherein at least 5 wt% of the particles have a particle size of above 4.75 mm; and
   blending the milled cement clinker and the supplementary cementitious material.

2. The method according to claim 1, wherein the milling of the calcined raw material of the supplementary cementitious material and the milling of the cement clinker are conducted together, subsequently to mixing the components, or wherein the milling of the calcined raw material of the supplementary cementitious material and the milling of the cement clinker are conducted separately, followed by mixing the milled components.

3. The method according to any of the preceding claims, wherein the calcining of the raw material of the supplementary cementitious material is conducted by heating the raw material at a heating rate of 200 °C/min or less, preferably 150 °C/min or less, more preferably 100 °C/min or less to a distinct calcining temperature.

4. The method according to any of the preceding claims, wherein the calcining of the raw material of the supplementary cementitious material is conducted at temperature of 500 to 980°C, preferably 700 to 950°C.

5. The method according to any of the preceding claims, wherein the raw material of the supplementary cementitious material has an average particle size of 5 to 250 mm, preferably 10 to 200 mm, more preferably 20 to 150 mm.

6. The method according any of the preceding claims, wherein the content of the supplementary cementitious material in the cement is 5 to 50 wt%, preferably 10 to 45 wt%, more preferably 15 to 40 wt%, most preferably 20 to 35 wt%, based on the overall weight of the cement.

7. The method according to any of the preceding claims, wherein the calcining retention time of the raw material of the supplementary cementitious material at the calcining temperature is selected, depending on the particle size of the raw material of the supplementary cementitious material.

8. The method according to any of the preceding claims, wherein the method further comprises the step of crushing the raw material of the supplementary cementitious material prior to calcining, preferably by a device selected from the group comprising a roller press, a jaw crusher, a hammer rusher, a cone crusher, or a combination thereof.

9. The method according to any of the preceding claims, wherein the method further comprises the step of screening the raw material of the supplementary cementitious material prior to calcining, wherein the raw material of the supplementary cementitious material is separated in at least two fractions, which differ in their average particle sizes, wherein one of the fractions is used for calcining, preferably by a device selected from the group comprising a trommel screen, a vibrating screen, an air sieve, or a combination thereof.

10. The method according to any of the preceding claims, wherein the method further comprises the step of storing and/or preheating the raw material of the supplementary cementitious material prior to calcining.

11. The method according to any of the preceding claims, wherein the method is a continuous process comprising the step of calcining the raw material of the supplementary cementitious material in a kiln, wherein the kiln is preferably a rotary kiln and/or a vertical shaft kiln.

12. The method according to claim 11, wherein calcining the raw material of the supplementary cementitious material is conducted with in a kiln with a separate heating unit and/or combustion unit, wherein the heating unit is preferably a device selected from the group comprising an electrical furnace, a solar tower, a waste heat device, a plasma burner, or a combination thereof, and wherein the combustion unit is preferably a device selected from the group comprising a grate furnace, a rotary kiln, a fluidized bed, or a combination thereof.

13. The method according to any of the preceding claims, wherein the method further comprises the step of cooling the supplementary cementitious material after calcining, preferably with gas containing 0-21 % oxygen, wherein the cooling is preferably conducted with a cement cooler and/or a rotary heat exchanger, wherein the cooler exhaust gas is preferably returned up-stream to the process.

14. Method for producing a cement comprising milled cement clinker and a supplementary cementitious material, wherein the method comprises the steps of:

producing the milled cement clinker by a clinkerization process, comprising the steps of calcining and subsequently milling a limestone-based raw material;
producing the supplementary cementitious material by calcining a raw material of the supplementary cementitious material at a temperature of less than 980°C and subsequently milling the calcined raw material of the supplementary cementitious material, wherein the raw material of the supplementary cementitious material has an average particle size of 1 to 300 mm; and
blending the milled cement clinker and the supplementary cementitious material;
wherein the method is a continuous process comprising the step of calcining the raw material of the supplementary cementitious material in a kiln with a separate heating unit and/or combustion unit.

15. Cement comprising milled cement clinker and a supplementary cementitious material, wherein the supplementary cementitious material comprises an amorphous constituent of more than 30 wt% as measured by XRD, wherein the supplementary cementitious material comprises less than 70 wt% of inert components selected from the group comprising mullite, spinel, feldspar, diopside, mica, or combinations thereof, and wherein the color of the cement in the range of 130-160, 130-160, 120-160, wherein the measurement of the cement color is conducted by a RGB2 colorimeter, wherein the colors are referenced to a RGB scale of 0 to 255.

Figure 1

EP 3 828 151 A1

Figure 2

EP 3 828 151 A1

Figure 3

Figure 4

EP 3 828 151 A1

Figure 5

*Figure 6*

Cold gas

Cold solid material

Hot gas

Hot gas

Hot solid material

Europäisches
Patentamt

European
Patent Office

Office européen
des brevets

# EUROPEAN SEARCH REPORT

Application Number

EP 19 21 1456

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2011 014498 A1 (OUTOTEC OYJ [FI]) 20 September 2012 (2012-09-20) * paragraphs [0016], [0139]; claims 1,2 * ----- | 1-15 | INV. C04B7/13 |
| A | US 2007/095255 A1 (ABBATE WILLIAM V [US] ET AL) 3 May 2007 (2007-05-03) * the whole document * ----- | 1-15 | |

TECHNICAL FIELDS
SEARCHED (IPC)

C04B

The present search report has been drawn up for all claims

| Place of search | Date of completion of the search | Examiner |
|---|---|---|
| Munich | 14 May 2020 | Roesky, Rainer |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

& : member of the same patent family, corresponding
     document

EPO FORM 1503 03.82 (P04C01)

## ANNEX TO THE EUROPEAN SEARCH REPORT
## ON EUROPEAN PATENT APPLICATION NO.

EP 19 21 1456

This annex lists the patent family members relating to the patent documents cited in the above-mentioned European search report.
The members are as contained in the European Patent Office EDP file on
The European Patent Office is in no way liable for these particulars which are merely given for the purpose of information.

14-05-2020

| Patent document cited in search report | Publication date | Patent family member(s) | Publication date |
|---|---|---|---|
| DE 102011014498 A1 | 20-09-2012 | AU 2012230623 A1<br>BR 112013023717 A2<br>CA 2826587 A1<br>CN 103459347 A<br>DE 102011014498 A1<br>EA 201391163 A1<br>GB 2502499 A<br>JO 2987 B1<br>US 2014000491 A1<br>WO 2012126696 A1 | 19-09-2013<br>13-12-2016<br>27-09-2012<br>18-12-2013<br>20-09-2012<br>31-03-2014<br>27-11-2013<br>05-09-2016<br>02-01-2014<br>27-09-2012 |
| US 2007095255 A1 | 03-05-2007 | CA 2627514 A1<br>CN 101321710 A<br>EP 1951635 A1<br>KR 20080072001 A<br>US 2007095255 A1<br>WO 2007053398 A1 | 10-05-2007<br>10-12-2008<br>06-08-2008<br>05-08-2008<br>03-05-2007<br>10-05-2007 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20120055376 A1
- CN 101913787

**Non-patent literature cited in the description**

- Report on the Use of Raw or Processed Natural Pozzolans in Concrete. American Concrete Institute, July 2012, vol. 232.1R-12
- **E.F. IRASSAR et al.** *Calcined illite-chlorite shale as supplementary cementing material: Thermal treatment, grinding, color and pozzolanic activity,* 2019, vol. 179
- **BICH et al.** *Applied Clay Science,* 2009, vol. 44, 194-200
- **R.E. GRIM ; W.F. BRADLEY.** Investigation of the Effect of Heat on the Clay Minerals Illite and Montmorillonite. *Journal of the American Ceramic Society,* 1940, vol. 23 (8), 242-248